(19) Europäisches Patentamt
European Patent Office
Office européen des brevets

(11) **EP 2 750 087 A1**

(12) **EUROPEAN PATENT APPLICATION**

(43) Date of publication:
**02.07.2014 Bulletin 2014/27**

(51) Int Cl.:
***G06Q 10/04*** *(2012.01)*   ***G06Q 10/08*** *(2012.01)*

(21) Application number: **12199758.9**

(22) Date of filing: **28.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **EXAPAQ SAS**
**75015 Paris (FR)**

(72) Inventors:
• **Cavoue, Patrick**
**75015 PARIS (FR)**
• **Mazzoni, Thierry**
**75015 PARIS (FR)**

(74) Representative: **Osha Liang SARL**
**32, avenue de l'Opéra**
**75002 Paris (FR)**

(54) **Methods and systems for determining estimated package delivery/pick-up times**

(57)     A method for estimating predictive time information of a package delivery service stop at an address in a service area is proposed, in a package service management system comprising a processor operatively coupled with a memory, wherein the service area is represented by a plurality of cells forming a mesh data structure stored in the memory, wherein at least some of the cells are associated with respective service delivery history information. The method comprises determining a cell of the mesh data structure covering a geographical area which comprises the location that corresponds to the address, selecting a cell of the mesh data structure among the cells associated with respective service delivery history information, based on its proximity with the determined cell, retrieving service delivery history information associated with the selected cell, and generating estimate predictive time information for servicing the package at the address based on the retrieved service delivery history information.

FIG.9

EP 2 750 087 A1

**Description**

The present subject disclosure generally relates to the field of package delivery services, and more particularly to the determination of estimated package delivery/pickup times.

A package delivery service provided in a certain service area using a fleet of vehicles is usually provided by drivers who stop at different locations specified in a tour for delivering or picking up packages in the service area. Each driver will typically be assigned a certain service area on a daily basis and make a number of stops in the assigned service area during working time. The set of stops constitutes the driver's tour, and may be predetermined in the morning before the driver starts the tour. The amount of time needed for a driver to complete a tour will mostly depend on the time spent driving in-between stops, and on unplanned events that require a modification of the tour once it is already started. The time spent driving in-between two stops may be increased by a number of factors, e.g. road traffic or road work, however such increase may be avoided or reduced if the driver is significantly experienced in servicing the assigned service area.

The package delivery service industry is generally divided in two segments, depending on whether the service provider's customer is itself a professional or not. In the Business to Business (B2B) segment, the service provider's customer is a professional, which often creates no or fewer constraints for the service provider in terms of its availability during the driver's working time for package picking-up or delivery. This allows, in the B2B business segment, the design of tours with an objective of high productivity, i.e. a maximized number of packages delivered in a minimum time. Such tour design principle can indeed be best applied when the service provider's customer is a business, which often does not require that delivery or pickup time is within a certain time window when the customer is available to receive the driver for service delivery. This high productivity objective can even be optimized with drivers who are experienced in a certain service area and know well the roads, as well as the stops, in their assigned service area.

In the Business to Customer (B2C) segment, this parameter becomes key for designing tours in which most if not all the driver stops are successful, that is the number of stops leading to package pickup or delivery not being completed because of customer's unavailability is minimized. Indeed, failures in package pickups/deliveries can significantly deteriorate the productivity of a package delivery service provider and the efficiency of drivers, regardless of their experience in servicing their service area and knowledge thereof.

There is therefore a need for an improved package delivery method and system which allows in particular for an increase in driver's productivity including when operating in the B2C segment.

It is an object of the present subject disclosure to provide a method for estimating predictive time information of a package delivery service stop at an address in a service area, in a package service management system comprising a processor operatively coupled with a memory, wherein the service area is represented by a plurality of cells forming a mesh data structure stored in the memory, wherein at least some of the cells are associated with respective service delivery history information. The method comprises, with respect to a package to be serviced, determining a cell of the mesh data structure covering a geographical area which comprises the location that corresponds to the address, selecting a cell of the mesh data structure among the cells associated with respective service delivery history information, based on its proximity with the determined cell, retrieving service delivery history information associated with the selected cell, and generating estimate predictive time information for servicing the package at the address based on the retrieved service delivery history information.

According to further aspects of the present disclosure, disclosed is a non-transitory computer-readable storage medium. The computer-readable storage medium can store a computer program that, when executed, causes a package service management system comprising a processor operatively coupled with a memory, to perform any of the methods disclosed herein for estimating predictive time information of a package delivery service stop at an address in a service area, wherein the service area is represented by a plurality of cells forming a mesh data structure stored in the memory, wherein at least some of the cells are associated with respective service delivery history information.

According to one or more additional aspects, disclosed is a package service management system. The package service management system may comprise a processor and a memory, operatively coupled to the processor, and may be configured to perform any of the methods disclosed herein for estimating predictive time information of a package delivery service stop at an address in a service area, wherein the service area is represented by a plurality of cells forming a mesh data structure stored in the memory, wherein at least some of the cells are associated with respective service delivery history information.

According to yet other aspects, disclosed is a computer program product comprising computer program code tangibly embodied in a computer readable medium, said computer program code comprising instruction to, when provided to a computer system and executed, cause said computer to perform any of the methods disclosed herein for estimating predictive time information of a package delivery service stop at an address in a service area, wherein the service area is represented by a plurality of cells forming a mesh data structure stored in the memory, wherein at least some of the cells are associated with respective service delivery history information.

In an embodiment of each of the above aspects, the mesh data structure is formed with square-shaped cells.

Such a data structure facilitates the processing thereof, for example for determining that a point if within a cell of the data structure.

In another embodiment, the selection of a cell of the mesh data structure is based on a geographical proximity with the determined cell. A cell search algorithm is configured to search the cell associated with history information which is geographically the closest to the determined cell on the mesh data structure.

In yet another embodiment of each of the above aspects, the selection of a cell of the mesh data structure among the cells associated with respective service delivery history information includes selecting a cell for which associated service delivery history information includes more than a predetermined number of time values. This provides a first exemplary criterion for qualifying cells associated with history information in a mesh data structure, so that only qualified cells may be used for the generation of estimate predictive time information for servicing the package.

In yet another embodiment of each of the above aspects, the retrieving of service delivery history information includes retrieving information identifying a day of the week associated with other service delivery history information.

In yet another embodiment of each of the above aspects, the method further comprises processing service delivery history information of cells associated with respective service delivery history information to calculate a median value of a set of time values in said respective service delivery history information. In such case, the calculated median value is included in the retrieved service delivery history information associated with the selected cell.

In yet another embodiment of each of the above aspects, the method further comprises processing service delivery history information of cells associated with respective service delivery history information to calculate a median value quality factor from the set of time values in said respective service delivery history information. The median value quality factor may be used to determine whether or not the history information collected for a cell fulfills certain predetermined criteria, and can be used for the generation of estimate predictive time information. An exemplary criterion is a predetermined interval, which is tested against the calculated median value quality factor. If the calculated median value quality factor does not fulfill the predetermined criteria, the calculated median value may be disregarded and not used for the generation of estimate predictive time information.

In yet another embodiment of each of the above aspects, the median value quality factor is determined as the standard deviation of the set of time values in said respective service delivery history information, multiplied by the value of interquartile range of the set of time values in said respective service delivery history information.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

The present subject disclosure will be better understood and its numerous objects and advantages will become more apparent to those skilled in the art by reference to the following drawings, in conjunction with the accompanying specification, in which:

Fig. 1 is illustrates an example package delivery/pickup management system, according to an example embodiment.

Fig. 2a, 2b and 2c illustrate exemplary cell identifiers according to an example embodiment.

Fig. 3 illustrates an exemplary table of correspondence between respective example cell identifiers and example cell vertice coordinates according to an example embodiment.

Fig. 4 illustrates a flow diagram of an exemplary process for the identification and selection of prediction cells according to an example embodiment.

Fig. 5 illustrates an exemplary prediction history initial table according to an example embodiment.

Fig. 6 illustrates an exemplary prediction history table according to an example embodiment.

Fig. 7 illustrates an exemplary time dispersion table according to an example embodiment.

Fig. 8 illustrates a flow diagram of an exemplary processing of a time dispersion table according to an example embodiment.

Fig. 9 illustrates a flow diagram of an exemplary process for determining estimated service times according to an example embodiment.

Fig. 10 illustrates an exemplary cell search process for selecting a prediction cell according to an example embodiment.

Figs. 11a and 11b illustrate exemplary prediction cell tables according to an example embodiment.

The advantages, and other features of the components disclosed herein, will become more readily apparent to those having ordinary skill in the art. The following detailed description of certain preferred embodiments, taken in conjunction with the drawings, sets forth representative embodiments of the subject technology, wherein like reference numerals identify similar structural elements.

In addition, it should be apparent that the teaching herein can be embodied in a wide variety of forms and that any specific structure and/or function disclosed herein is merely representative. In particular, one having ordinary skill in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, memory chip, RAM, ROM, EEPROM, smart cards, or any other suitable medium from that can be used to carry or store program code in the form of instructions or data structures which can be read by a computer processor. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, SQL, PHP, and JAVA.

Additionally, the word "exemplary" as used herein means serving as an example, instance, or illustration. Any aspect or design described herein as "exemplary" is not necessarily to be construed as preferred or advantageous over other aspects or designs.

Furthermore, as used herein, the terms "package pickup/delivery service" and "package delivery service" are used interchangeably, and refer to a service provided to deliver a package to a recipient, which may involve picking-up the package to be delivered at a sender's address. It should be noted that those terms are meant to cover various scenarios including, without limitations, scenarios in which package delivery (or package pickup/delivery) only involves the picking-up of the package, involves the both the picking-up and the delivery of the package, or involves only the delivery of the package.

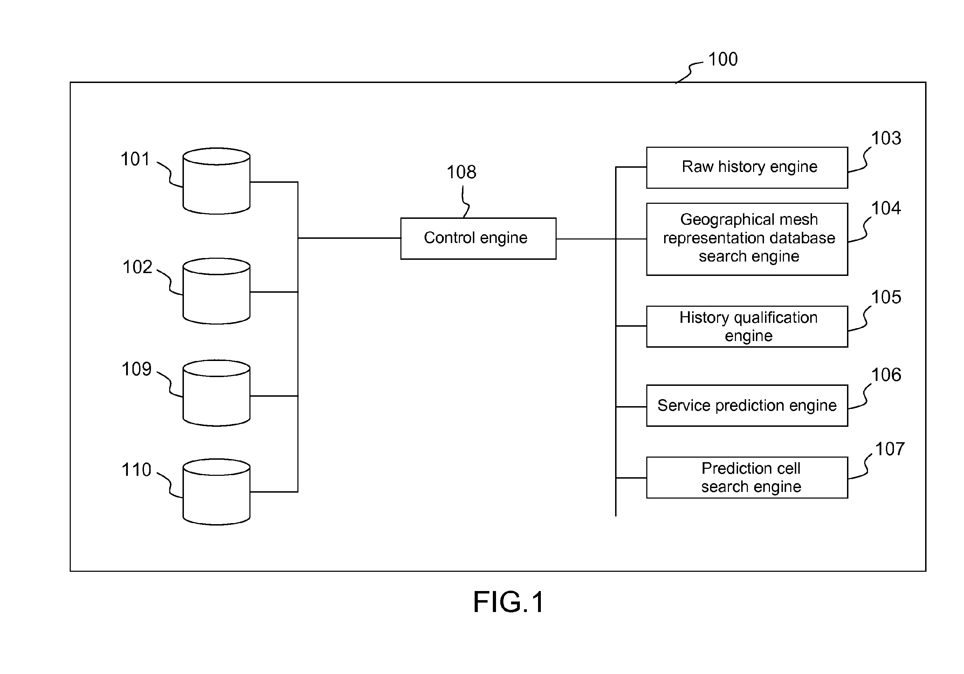

Referring to the figures, Fig. 1 illustrates an exemplary package delivery/pickup management system 100 configured to use a delivery/pickup prediction feature in accordance with the present disclosure. The package delivery/pickup management system 100 is a computer system which includes a prediction database memory 101, a geographical mesh representation database memory 102, a raw history engine 103, a geographical mesh representation database search engine 104, a history qualification engine 105, a service prediction engine 106, a prediction cell search engine 107, a control engine 108, an history database memory 109, and an other data memory 110. In the architecture illustrated on Fig. 1, all of the prediction database memory 101, geographical mesh representation database memory 102, raw history engine 103, geographical mesh representation database search engine 104, history qualification engine 105, service prediction engine 106, prediction cell search engine 107, history database memory 109, and other data memory 110 are operatively coupled with one another through the control engine 108.

In one embodiment, the raw history engine 103 provides cell related information to be inserted in a prediction history initial table that lists pickup/delivery stops for a given service territory. The geographical mesh representation database search engine 104 searches any geographical mesh representation for identifying a cell thereof, based on various search criteria such as, for example, the coordinates of a target location in a given service territory covered by the geographical mesh. In the present disclosure, cells of a geographical mesh representation for which service delivery history information is available are referred to as "prediction cells". The prediction cell search engine 107 selects in a geographical mesh representation a prediction cell which is related to a given cell of the geographical mesh representation according to a proximity criterion.

In some embodiments, the prediction cells may undergo a qualification process, which aims at selecting certain prediction cells based on qualification criteria. In an embodiment, the history qualification engine 105 determines, in a geographical mesh representation, among prediction cells, those that fulfills predefined prediction exploitation criteria, and selects them as qualified prediction cells. The service prediction engine 106 searches any geographical mesh representation for identifying a cell that includes the geographical address of a service stop for a package.

In an embodiment, the control module 108 includes a processor, which may be any suitable microprocessor, ASIC, and/or state machine. According to various embodiments, one or more of the computers can be configured as a multi-processor computer having multiple processors for providing parallel computing. The control module 108 may also comprise, or may be in communication with, computer storage media, such as, without limitation, the other data memory 110, capable of storing computer program instructions or software code that, when executed by the processor, cause the processor to perform the elements described herein. The prediction database memory 101, geographical mesh representation database memory 102, history database memory 109 and other data memory 110 may be any computer storage medium coupled to the control engine 108 and operable with one or more associated database management systems to facilitate management of data stored in respective databases and associated hardware.

It will be appreciated that the package delivery/pickup management system 100 shown and described with reference to Fig. 1 is provided by way of example only. Numerous other architectures, operating environments, and configurations are possible. Other embodiments of the system may include fewer or greater number of components, and may incorporate some or all of the functionality described with respect to the system components shown in Fig. 1. Accordingly, although the prediction database memory 101, geographical mesh representation database memory 102, raw history engine 103, geographical mesh representation database search engine 104, history qualification engine 105, service prediction engine 106, prediction cell search engine 107, control engine 108, history database memory 109 and other data memory 110 are illustrated as part of the package delivery/pickup management system 100, no restrictions are placed on the location and control of components 101 - 110. In particular, in other embodiments, components 101 - 110 may be part of different entities or computing systems.

In an embodiment, the package delivery/pickup management system 100 is configured to store and manage, via the geographical mesh representation database memory 102, one or several geographical mesh representation data sets, each corresponding to a service territory. As used herein, the terms "service territory" refer generally to a geographical area (e.g. a zip code area) or territory, without any restriction from a reference to an administrative or state organization, where the service is to be provided. Each geographical mesh representation comprises cells that are interconnected to form a mesh that covers a predefined service territory.

In some embodiments, the geographical mesh is built based on predefined geographical elementary cells such as, for example, zip codes geographical areas. In other embodiments, the geographical mesh is built based on square or rectangular mesh cells. For geographical meshes with cells that cover a substantially identical geographical surface, the dimension of the surface area represented by each cell may be chosen in view of the overall size of the service territory.

As used herein, the terms "empty cell" generally designate a cell which covers a scarcely populated geographical area. In rural areas, the computer generation of a geographical mesh with cells representing a surface area which is small in comparison to the size of rural areas comprised in the service territory covered by the mesh may lead to a significant number of empty cells which may be detrimental to the processing time efficiency of cell search algorithms. Therefore the dimension of the surface area represented by each cell may be preferably chosen by taking into account the number of "empty" cells, in addition to or as an alternative to the overall size of the service territory.

Accordingly, in some embodiments, several geographical meshes are built and stored in the geographical mesh representation database memory 102, each corresponding to a different service territory and/or scale. For example, a first geographical mesh may be built to cover a service territory corresponding to an entire country. This first mesh may comprise cells each representing a 1 km $\times$ 1 km area. The service territory is then divided into one kilometer quadrilateral elementary cells, which for France means in some embodiments a geographical mesh of approximately 12.5 million cells. Other geographical meshes may be built to cover sub-areas of the service territory covered by the first geographical mesh, based on cells that represent a smaller area size. For example, cells representing a 200 m x 200 m surface area may be better suited for densely populated areas or highly populated areas such as large cities. In the above example where a first mesh covers a service territory corresponding to an entire country, other meshes may cover territories corresponding to a subdivision (for example, in departments) of the first service territory corresponding to the entire country. Further subdivision of the first subdivision territories can also be covered by geographical meshes, with cells representing smaller scale geographical areas.

In some embodiments, cells are chosen of a quadrilateral shape, which facilitates the representation and identification thereof. For example, each quadrilateral cell may be defined in a two-dimensional space with a Cartesian coordinate system (with an X-axis and an Y-axis) by the coordinates of its four vertices ( $(x_{min},y_{min})$ ; $(x_{min},y_{max})$ ; $(x_{max},y_{min})$ ; $(x_{max},y_{max})$ ), or by the four coordinates $(x_{min}, y_{min}, x_{max}, y_{max})$ that define its four vertices. With square cells identified by such sets of coordinates of 4 vertices, a search algorithm may detect that a set of coordinates $(x_p,y_p)$ corresponds to a point that is located within the cell C if both of the following conditions are fulfilled:

$$x_p \in \left\{x_{min}^{C}; x_{max}^{C}\right\} \text{ and } y_p \in \left\{y_{min}^{C}; y_{max}^{C}\right\}.$$

In an embodiment, a geographical mesh representation where cells are square-shaped may take into account the fact that data processed from map projections such as the ETRS-LAEA reference system (also known as ETRS89 Lambert Azimuthal Equal Area) where meridians/parallels are projected on a sphere modeling the earth generate a mesh representation with rhomboid-shaped cells, that is, the cells of the geographical mesh are not orthogonal quadrilaterals. This may be corrected through pre-processing of the mesh generated based on ETRS-LAEA projection data. According to one aspect, the pre-processing includes determining an orthogonal quadrilateral that is included in each rhomboid-shaped cell. This determination may include determining the coordinates of a point representing a projection of some of the vertices of a rhomboid-shaped cell on the X axis or the Y axis. Each rhomboid-shaped cell may then be transformed into a square-shaped cell.

In an embodiment, a geographical mesh composed of square-shaped cells may be obtained by applying the afore-mentioned pre-processing transform to rhomboid-shaped cells obtained from map projections such as the ETRS-LAEA reference system. According to an aspect of the present disclosure, the pre-processing involves determining for a rhomboid-shaped cell a square cell that is inside the rhomboid. The geographical mesh composed of square-shaped cells may then comprise cells that do not have common vertices with adjacent cells, resulting in "holes" in the address coverage. With such "holes", a search algorithm configured to find a cell covering a predetermined address may fail if the target address corresponds to a point located inside a "hole" region.

In an embodiment, another pre-processing of the geographical mesh composed of square-shaped cells may involve broadening the size of the square-shaped cells in order to cover any "hole". The increase in cell size may be calculated as a function of the initial cell size, and determined to be at least equal to the size of the "holes". For example, for a square-shaped cell of 200 m$^2$ coverage with coordinates ( $(x_{min},y_{min})$ ; $(x_{min},y_{max})$ ; $(x_{max},y_{min})$ ; $(x_{max},y_{max})$ ), the increase of cell size may be achieved through rounding the values $x_{max}$ and $y_{max}$ to the upper meter, and rounding the values $x_{min}$ and $y_{min}$ to the lower meter. This may lead for 200 m$^2$ cells to a slight overlap between cells, thereby ensuring that all the "holes" are covered.

The above described preprocessing steps may be used in the generation of one or several geographical mesh representations of the service territory with square-shaped cells, possibly overlapping. In one embodiment, the cells of such a geographical mesh representation are identified through an identification data. For example, the identifier of a cell may be chosen to be the LAEA coordinates of the upper left vertice of the cell. LAEA coordinates may indeed be convenient to manipulate for data processing as they represent distances from an origin expressed in meters.

Another advantage of this exemplary cell identification scheme is that 200 m$^2$ cells may be considered as a sub-set of 1 km$^2$ cells. An example is provided below for 1 km$^2$ cell ids for cells in the French Côte d'Or department (21) and 200 m$^2$ cells in the same department.

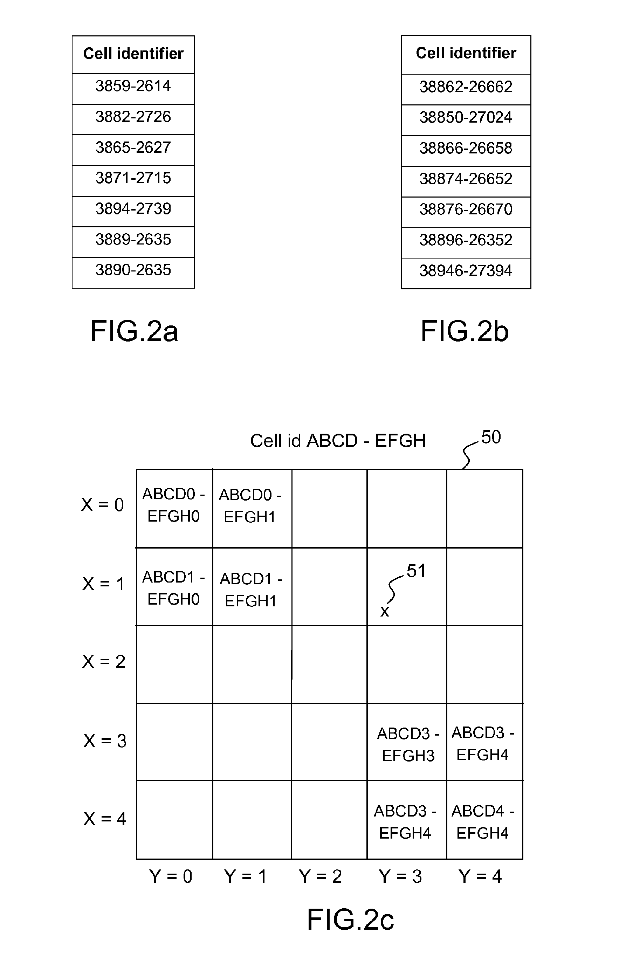

Fig. 2a and 2b show exemplary cell identifiers for 1 km$^2$ cells in French "Côte d'Or" department, and cell identifiers for 200 m$^2$ cells in French "Côte d'Or" department, respectively. In the embodiment illustrated in Fig. 2a and 2b, the cell identifiers are chosen so that 1 km$^2$ cell identifiers and 200 m$^2$ cell identifiers overlap. For example, the 200 m$^2$ cell identifier 38896-26352 on Fig. 2b and the 1 km$^2$ cell identifier 3889-2635 partially overlap in that the cell identifier 38896-26352 contains the cell identifier 3889-2635. This may indicate in some embodiments that the 200 m$^2$ cell identified by 38896-26352 is partially or fully included in the 1 km$^2$ cell whose identifier is 3889-2635. Likewise, the fact that the cell identifier 38946-27394 in the table of Fig. 2a partially overlap with the cell identifier 3894-2739 shown in the table of Fig. 2b may indicate, in some embodiments, that the 200 m$^2$ cell identified by 38946-27394 is partially or fully included in the 1 km$^2$ cell whose identifier is 3894-2739.

Each 1 km$^2$ cell contains 25 200 m$^2$ cells, and the naming scheme provides for obtaining the identifier of the 1 km$^2$ cell which contains a given 200 m$^2$ cell by removing a portion of the 200 m$^2$ cell identifier. This portion may correspond to a integer number of digits removed from the 200 m$^2$ cell identifier. For example, assuming that 1 km$^2$ cell identifiers consist of 8 digit identifiers, such as ABCD-EFGH, where A, B, C, D, E, F, G, and H are integer numbers, one may encode the identifiers of the twenty five 200 m$^2$ cells included in the ABCD-EFGH 1 km$^2$ cell with two additional digits X and Y, so that the structure of a cell identifier for 200 m$^2$ cells included in the ABCD-EFGH 1 km$^2$ cell is ABCD-AFGH-XY or, alternatively, ABCDX-EFGHY. In an embodiment, the two additional id numbers X and Y may be chosen from the set {0, 1,2,3, 4} as a function of the position of the 200 m$^2$ cell in the 1 km$^2$ cell, as illustrated in Fig. 2c. In such a scheme, assuming that the 25 200 m$^2$ cells can be organized as an array in the 1 km$^2$ cell, the X parameter may encode the line number, and the Y parameter may encode the column number. The 25 200 m$^2$ cells are then identified as a function of their respective position in the array, the respective position being encoded by the pair of parameters {X;Y}. Fig. 2c shows a 1 km$^2$ cell 50 with the 25 200 m$^2$ cells that the cell 50 includes. The cell 50 is identified by the id ABCD-EFGH. The five 200 m$^2$ cells that are located in the first row of 200 m$^2$ cells are identified as ABCDX-EFGHY where X = 0, and Y is equal to 0, 1, 2, 3, and 4, respectively. The five 200 m$^2$ cells that are located in the second row of 200 m$^2$ cells are identified as ABCDX-EFGHY where X = 1, and Y is equal to 0, 1, 2, 3, and 4, respectively. The same naming scheme applies to the cells of the second, third and fourth row, for which X is equal to 2, 3, and 4, respectively. It may be advantageous, in particular for naming purposes, to choose two geographical mesh representations with cells of the same shape but different dimensions, chosen so that each cell of one geographical mesh representation fits entirely in only one cell of the other geographical mesh representation. In the example illustrated in Fig. 2c, there is no 200 m$^2$ cell that crosses the boundaries of the ABCD-EFGH cell 50. The naming scheme illustrated on Fig. 2c provides a convenient way of determining the identifier of a comprising cell from the identifier of a comprised cell, in a system where two geographical mesh representations with cells of different dimensions such that cells from the first geographical mesh representation fit into cells from the second geographical mesh representation. Shown on Fig. 2c is a point 51 located in the 200 m$^2$ cell with identifier ABCD1-EFGH3. Once the identifier of the 200 m$^2$ cell in which the point 51 is located has been determined, the identifier of the corresponding 1 km$^2$ cell can be determined by removing the parameters X and Y from the identifier of the 200 m$^2$ cell, leading in the example of Fig. 2c to the identifier ABCD-EFGH of the 1 km$^2$ cell 50.

In one embodiment, several geographical mesh representations of the service territory with square-shaped cells are stored in the geographical mesh representation database memory 102 of the package delivery/pickup management system 100. As described above, a geographical mesh representation of the service territory with square-shaped cells may comprise a set of data, each corresponding to a cell of the geographical mesh. Data corresponding to a cell may include an identifier cell_id and a set of coordinates corresponding to the 4 vertices of the square-shaped cell, respectively.

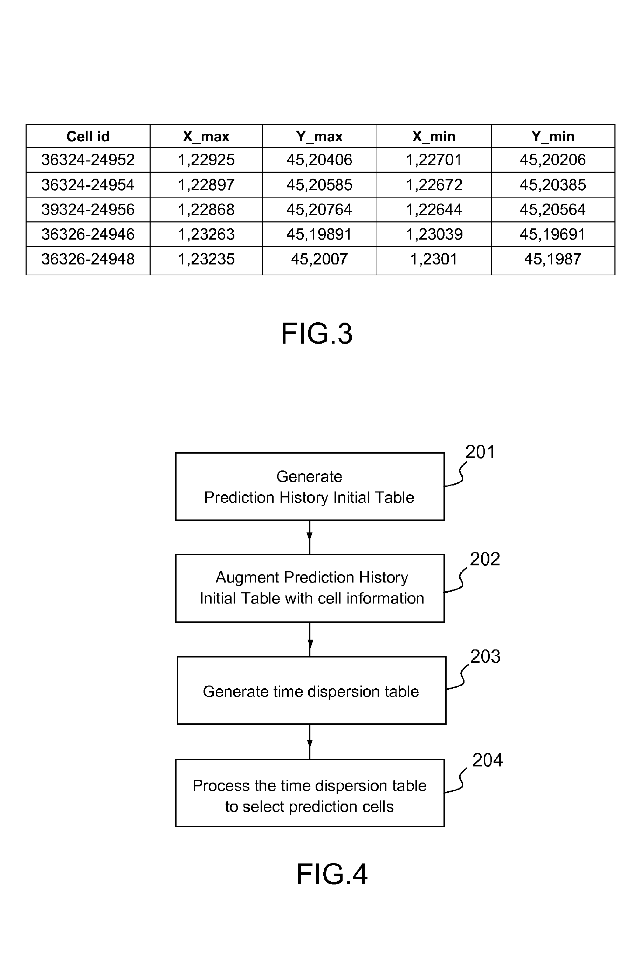

Fig. 3 shows an exemplary table of correspondence between respective example cell identifiers and example cell vertice coordinates. In the table illustrated in Fig. 3, each cell identifier is associated with a quadruplet of coordinates ($x_{min}$ , $y_{min}$ , $x_{max}$ , $y_{max}$) from which the coordinates in a Cartesian system of the four vertices of the corresponding cell can be derived. The geographical mesh representation database comprises a data set that corresponds to an organized list of cells which may include, for each cell listed, data such as a cell identifier and a quadruplet of coordinates as illustrated on Fig. 3.

In an embodiment, the package delivery/pickup management system 100 is configured to store and manage, via the prediction database memory 101, a prediction database which includes a table that stores pickup/delivery information collected by the system 100.

Historical data related to the service delivery over a predefined period are organized in a prediction database stored in prediction database memory 101. Those data are processed in order to generate historical data associated with cells of geographical mesh representations of the service territory. Such historical data may then be added to the set of data corresponding to certain cells which thereby becomes prediction cells. The set of prediction cells in a geographical mesh representation of the service territory may be updated, possibly regularly, since the amount of historical data increases on the same basis as the rhythm with which the service is delivered. For example, a package service/delivery pickup service may be operated on a daily basis, so that data related to the time and location of stops for package pickup/delivery can be fed to the prediction database on a daily basis.

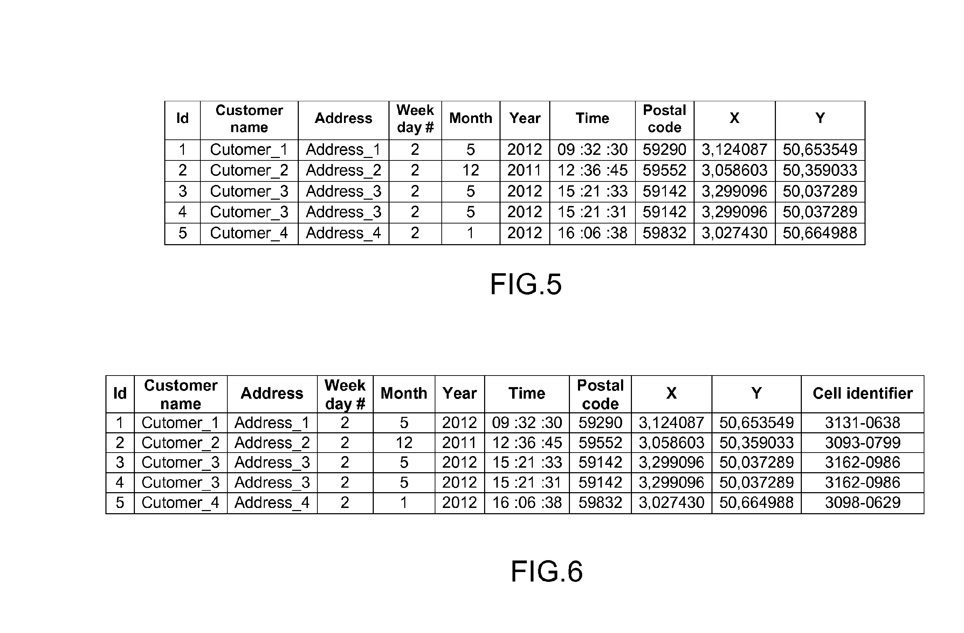

With reference to Fig. 4, a flow diagram illustrates an example method by which certain prediction cells are qualified, i.e. selected, among a set of prediction cells of a geographical mesh representation, based on historical data available for service delivery stops in the corresponding service territory, according to one embodiment. The prediction database contains a prediction history initial table that lists pickup/delivery stops for a given service territory (for example, a department or zip code area). The prediction history initial table is generated 201 based on historical information on service delivery which is collected and stored in the history database memory 109. Service delivery data may be collected and stored in the history database memory 109 on a regular basis (e.g. on a daily basis) based on information collected by the drivers using a hand scanner or any other device for tracing and recording information related to a service delivery stop. The prediction history initial table may include for example the list of all service stops over a period of twelve months. Shown on Fig. 5 is an exemplary table which includes, for each service delivery item, information such as an identifier in the list, the name of the customer, the address for the stop, a sequence number (e.g. from 1 to 7 or from 1 to 5) of the day of the week on which the stop occurred, the month and year of the stop, the time at which the stop occurred, the zip code in which the stop occurred and geographical coordinates of the stop. The geographical coordinates can be, for example, WGS84 coordinates (X;Y) of the stop.

As described above, the geographical mesh representation database memory 102 of the package delivery/pickup management system 100 may also store one or several geographical mesh representations of the service territory. For mesh representations with square-shaped cells, a set of data may be stored in the database memory for each cell, which may include an identifier cell_id and a set of four coordinates ($x_{min}$ ; $y_{min}$ ; $x_{mas}$ ; $y_{max}$) corresponding to the 4 vertices of the square-shaped cell. Preferably, each of the four coordinates corresponds to the same coordinate system and format as the coordinates used in the prediction history initial table. Otherwise a step of coordinate transposition will be added to the process described below. In an exemplary embodiment, the four coordinates defining the vertices of a cell are WGS84 coordinates. As discussed above Fig. 3 shows an exemplary table which comprises respective cell data for a list of square-shaped cells, each identified by an identifier cell_id. The set of data shown for each cell is the four WGS84 coordinates ($x_{min}$ ; $y_{min}$ ; $x_{max}$ ; $y_{max}$) which define the four vertices of the cell.

In an embodiment, the raw history engine 103 is configured to augment 202 the prediction history initial table with information related to the relevant cells. For example, the raw history engine 103 may augment each record of the prediction history initial table with the cell identifier of the cell corresponding to the service stop in the prediction history initial table. The raw history engine 103 executes a history qualification process which includes parsing the records of the prediction history initial table, for example in a loop. For each record of the prediction history initial table, the raw history engine 103 selects the corresponding ($X_{ss}$ ; $Y_{ss}$) WGS84 coordinates of the service stop. The raw history engine 103 then passes the pair of coordinates to the geographical mesh representation database search engine 104. This search engine 104 executes a search algorithm for identifying a cell in the geographical mesh representation database.

Various search algorithms may be used, such as, for example, a sequential search in the records of the geographical mesh representation database, for identifying at least one cell that includes the coordinates of the service stop. The inclusion test described above may be used for that purpose, that is, the search engine 104 may check whether or not the two following conditions are fulfilled by the ($X_{ss}$ ; $Y_{ss}$) WGS84 coordinates of the service stop and the four WGS84 coordinates ($x_{min}$ ; $y_{min}$ ; $x_{max}$ ; $y_{max}$) which define the four vertices of the cell: $X_{ss} \in \{x_{min}; x_{max}\}$ and $Y_{ss} \in \{y_{min};y_{max}\}$. In an embodiment, the search stops upon identifying a cell for which the inclusion test is fulfilled, and the search engine 104 adds the identifier of the identified cell in the record of the prediction history initial table under process. In another embodiment, the search stops until all the records of the geographical mesh representation database have been searched, and the search engine adds the identifier of all identified cells in the record of the prediction history initial table under process. The raw history engine 103 then selects the next record in the prediction history initial table and executes again the above-described process for determining at least a cell that includes the service stop of the next record. A prediction history table can thereby be generated by processing the prediction history initial table and augmenting the same with cell identifiers corresponding to cells covering respective service stops listed in the table.

An exemplary prediction history table is shown on Fig. 6. The exemplary prediction table includes a list of records, each of which corresponds to service stop history. For each record, the exemplary prediction history table includes the same data as shown in Fig. 5 (identifier in the list, the name of the customer, the address for the stop, a sequence number (from 1 to 7) of the day of the week on which the stop occurred, the month and year of the stop, the time at which the stop occurred, the zip code in which the stop occurred and geographical coordinates of the stop), however augmented with the identifier of the cell corresponding to the service stop.

Examples of service territories which respectively correspond to a prediction history table include zip code areas, departments, or nationwide territory. It will be understood by the one skilled in the art that the processing time for the engines to run their algorithms will depend not only on the efficiency of the algorithms, but also on the size of the tables which contain data to be processed. Therefore, in an embodiment, several prediction history tables are generated, each corresponding to a limited service territory (both in size and in population density), e.g. a department.

In an embodiment, a time dispersion table listing available service delivery history data for each prediction cell, that is, each cell for which such history information is available, is generated by the history qualification engine 105, based on the prediction history table data. The history qualification engine 105 selects one cell identifier in the prediction history table and then searches all records of the prediction history table that includes the searched cell identifier. This search is repeated for each different cell identifier found in the prediction history table data.

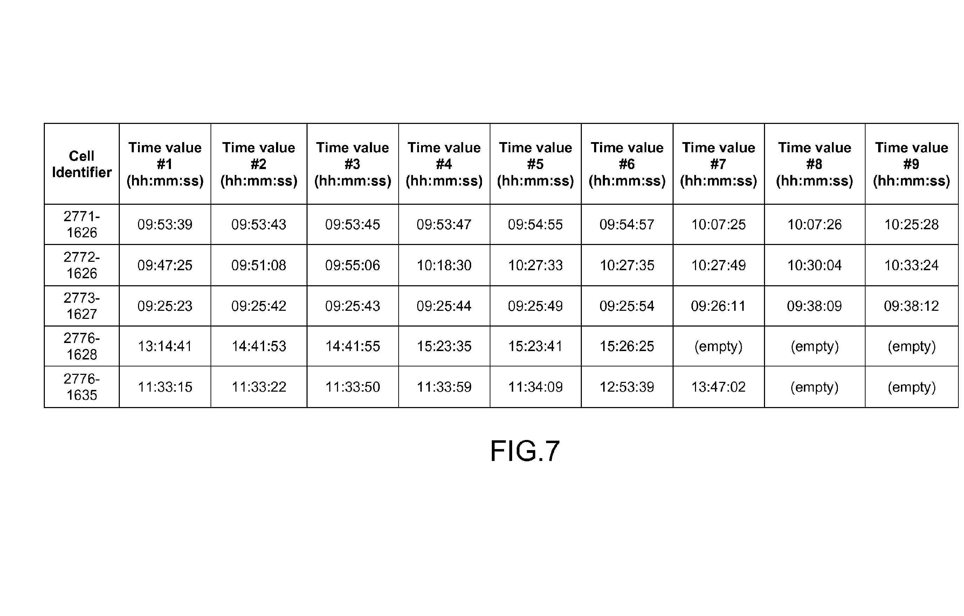

In an embodiment, a record is created in the time dispersion table for each cell identifier in the prediction history table. The time of the service delivery recorded for each instance of a given cell identifier found in the prediction history table is added in the corresponding record in the time dispersion table, so that the time dispersion table lists all the times at which a service has been delivered in a given cell based on the history data stored in the prediction history table. Shown on Fig. 7 is an exemplary time dispersion table. The left column of the exemplary time dispersion table lists different cell identifiers, to each of which corresponds a row that lists all available service delivery history times. The time information is shown in the format hh.mm.ss (hour.minute.second). The length of a row in the time dispersion table depends on the number of records found in the searched prediction history table which correspond to the cell identifier of the row. A row may include duplicates, triplicates or more than three instances of the same time, and those instances are preferably not reduced to a single one in the row. Therefore the length of a row can become quite large, and may include for example more than 600 time values for cells in which a significant number of service stops are made.

It should be noted that a single time dispersion table may be created based on the prediction history table, therefore gathering together all history data respectively related to different cell identifiers. Alternatively, several dispersion tables may be created that correspond to different days of the week. For example, in an embodiment, two dispersion tables may be created, one gathering history data related to cells for week days, and the other gathering history data related to cells for week-end days. This may advantageously more accurately reflect the different history in times at which stops occurred in a given cell, depending whether the service delivery was completed during a week-end or on a week day. In a different embodiment, seven dispersion tables may be created, each corresponding to a day of the week. This provides a finer granularity history data that can be processed for further exploitation as described hereinafter.

In some embodiments, the history qualification engine 105 processes 204 the time dispersion table(s) by determining the median value of the data set corresponding to each row of the processed time dispersion table. This may lead to a time value corresponding to each cell listed in a time dispersion table. In this embodiment, at least some of the cells corresponding to a row of the table do not undergo a prediction cell qualification process, and the calculated median value is stored with its corresponding cell identifier.

In other embodiments, data stored in the time dispersion table is processed on a per record basis, for purposes of a prediction cell qualification process which aims at selecting only those prediction cells which fulfill predefined criteria. In an embodiment, the history qualification engine 105 is also configured to carry out a prediction cell qualification process, including determining among the cells for which history information is available those that fulfills predefined criteria. An example of such qualification process is described below.

In an embodiment, the history qualification engine 105 processes 204 the time dispersion table(s) by executing a sort algorithm on the records of each time dispersion table which is based on one or several predefined sort criteria. The cells that satisfy those sort criteria are considered qualified prediction cells, that is, estimate predictive time information that may be generated therefrom would be eligible for use, for instance in a service delivery process.

One exemplary sort criterion is a minimum number of time values for a cell, i.e. in a record of the time dispersion table. For example, the history qualification engine 105 may check whether or not there are more than a predetermined number of time values in the record corresponding to a given cell. The minimum number of time values could be chosen equal to five, for example. Then, if the number of time values in a row is not at least equal to 5, the row is disregarded and the corresponding cell does not qualify as qualified prediction cell. On the contrary, if the number of time values in a row is equal or greater to five, the row is not disqualified and the criterion is met.

Another exemplary sort criterion applies to the median value of the data set consisting of the time values in a given row. The median value is first calculated, and the corresponding prediction cell record is then selected or disregarded based on the value of a median quality factor. In an embodiment, the median quality factor InFi may be defined as:

$$\text{InFi} = \text{standard deviation} \times \text{value of interquartile range.}$$

The standard deviation is calculated on the data set composed of the set $(x_i)_{i=1...n}$ of n time values of the processed row of the time dispersion table, as $S = \sqrt{\frac{\sum_{i=1}^{n}(x_i - \bar{x})^2}{n}}$, where $\bar{x}$ is the mean of the data set $(x_i)_{i=1...n}$.

The value of interquartile range is calculated as the difference between the upper and lower quartiles (Q3-Q1) of the data set composed of the set of time values of a given row of the time dispersion table. For the calculation of the value of the InFi parameter, the value of the interquartile range may be calculated from time values converted to decimal format.

The median quality factor InFi is used to verify that data in the data set are not too dispersed and that the calculated median value can be exploited in the process for predicting service delivery times. The InFi calculated value is tested to check whether or not it falls inside a predetermined interval. If it does, the cell corresponding to the data set qualifies as qualified prediction cell. Otherwise the corresponding cell does not qualify as qualified prediction cell. Exemplary upper and lower bound values for the InFi test interval are: 0.0002025099 for the lower bound, and 0.0062958543 for the upper bound.

The history qualification engine 105 may check whether or not the calculated InFi value is smaller or equal to a first predetermined InFi threshold Th4. If not, the corresponding cell does not qualify as qualified prediction cell. If yes, the history qualification engine 105 may check whether or not the calculated InFi value is greater or equal to a second predetermined InFi threshold Th3. If not, the corresponding cell does not qualify as qualified prediction cell. If yes, the corresponding cell may qualify as qualified prediction cell. Exemplary values for the thresholds Th3 and Th4 may be as mentioned above equal to 0.0002025099 and 0.0062958543, respectively.

Another exemplary sort criterion relates to the interquartile range of the data set consisting of time values in a row of a time dispersion table. The interquartile range values Q1 and Q3 (the median value being noted Q2) may be calculated, and the difference between Q3 and Q1 may be compared to threshold values Th1 and Th2. In an embodiment, the history qualification engine 105 may check whether or not the calculated difference Q3 - Q1 is smaller or equal to a first predetermined interquartile threshold Th2. If not, the corresponding cell does not qualify as qualified prediction cell. If yes, the history qualification engine 105 may check whether or not the calculated difference Q3 - Q1 is greater or equal to a second predetermined interquartile threshold Th1. If not, the corresponding cell does not qualify as qualified prediction cell. If yes, the corresponding cell may qualify as qualified prediction cell. For example, the value of the lower interquartile threshold Th1 may be chosen equal to 00:05:00, that is, 5 minutes. If the difference Q3 - Q1 is smaller than 5 minutes, it means that half of the time values of the data set fit within a time interval of less than five minutes. This may indicate a corruption in the data set possibly originating from the manner in which the data has been collected. In such a case, it may be chosen to disregard the entire data set and decide that the corresponding cell does not qualify as qualified prediction cell. In addition, the value of the upper interquartile threshold Th2 may be chosen equal to 02:45:00, that is, a time duration of two hours and forty five minutes. If the difference Q3 - Q1 is greater than two hours and forty five minutes, it means that half of the time values of the data set fit within a time interval of more than two hours and forty five minutes. This indicates dispersion of the data set to some extent which me be considered as unacceptable for qualifying the cell as qualified prediction cell.

It should be noted that although each of the above described criteria corresponds to an embodiment of the proposed process for generating a list of qualified prediction cells and associated time data, they may be applied independently as sole sort criterion or cumulatively one after the other(s). That is, only one of them may be used to determine whether or not a cell qualifies as qualified prediction cell. Or they may be considered cumulative criteria, so that the qualification test of the cell will result in the cell not being qualified as qualified prediction cell as long as only one of those cumulative criteria is not met.

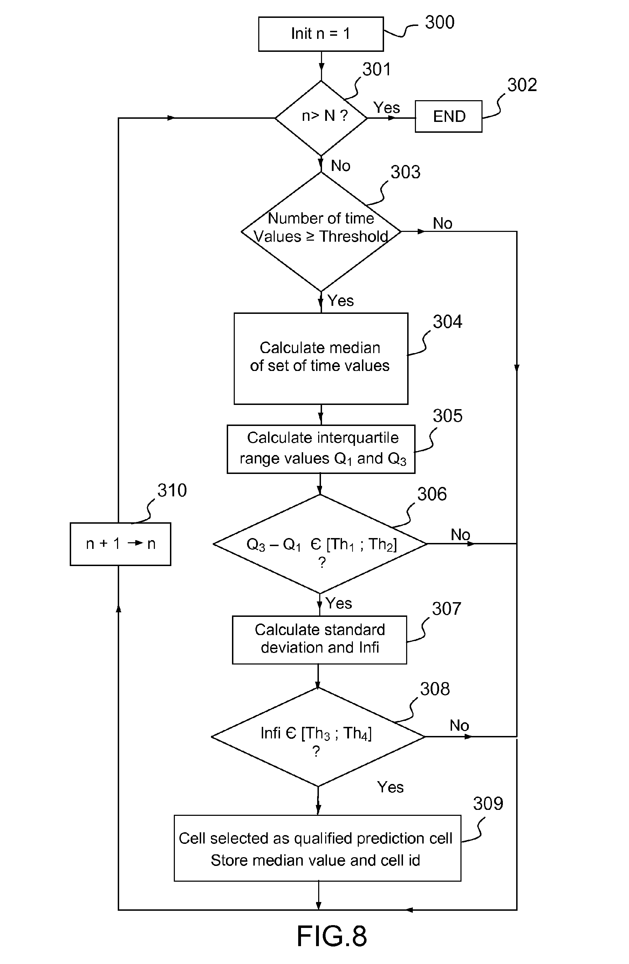

With reference to Fig. 8, a flow diagram illustrates an example method by which qualified prediction cells are selected, based upon an analysis of data of the time dispersion table, according to one embodiment. A loop counter n is first initialized 300 to an initialization value (in Fig. 8, equal to 1), and then compared 301 to the maximum number of records N in the time dispersion table. If the loop counter is strictly greater than the maximum number of records N, the loop ends 302. Otherwise the number of time values is compared to a first threshold 303. If the number of time values in the record being processed is greater than or equal to the first threshold, the loop proceeds to the calculation of the median value of the data set consisting of the time values of the record under process. Otherwise the cell corresponding to the record under process is not qualified as qualified prediction cell and the loop counter n is incremented to the value n+1 310. If the loop proceeds to the calculation of the median value 304, the interquartile range values Q1 and Q3 are also calculated 305, and the difference Q3 - Q1 is then tested to determine whether it is greater or equal than a first interquartile threshold Th1 and smaller or equal to a second interquartile threshold Th2 306. If the calculated interquartile difference Q3 - Q1 is greater or equal than the first interquartile threshold Th1 and smaller or equal to the second interquartile threshold Th2, the loop proceeds to the calculation of the standard deviation and median value quality factor 307. Otherwise the cell corresponding to the record under process is not qualified as qualified prediction cell and the loop counter n is incremented to the value n+1 310. If the loop proceeds to the calculation of the standard deviation and median value quality factor InFi 307, the calculated InFi factor is then tested to determine whether it is greater or equal than a first InFi threshold Th3 and smaller or equal to a second InFi threshold Th4 308. If the calculated InFi factor is greater or equal than the first InFi threshold Th3 and smaller or equal to the second InFi threshold Th4, the cell corresponding to the record under process is qualified as qualified prediction cell 309 and the loop counter n is incremented to the value n+1 310. Otherwise the cell corresponding to the record under process is not qualified as qualified prediction cell and the loop counter n is incremented to the value n+1 310. Once the loop counter has been incremented 310 the process loops back to the comparison 301 of the loop counter n with the maximum number of records N 301.

In an embodiment, cells that are selected as qualified prediction cell may be added to a prediction cell table which stores prediction cell identifiers with corresponding service delivery history information, such as the median value calculated 304. Additional service delivery history information may be stored in the prediction cell table with respect to cells qualified as qualified prediction cells, which includes, without limitation, the day of the week which the time history information corresponds to, and the calculated interquartile values. The prediction cell table may be stored in the history database memory 106 of the exemplary package delivery/pickup management system 100 illustrated on Fig. 1.

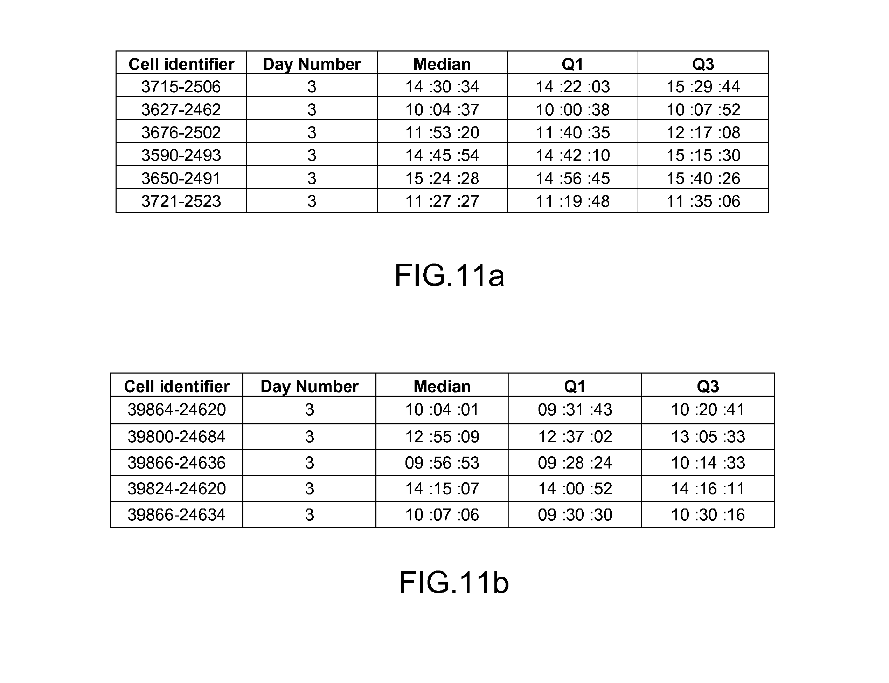

Fig. 11b shows an exemplary prediction cell table for 200 m$^2$ cells which lists, for each cell identified by its cell identifier, the sequence number of the day in a week to which the time information corresponds, the calculated median value, and the two interquartile values Q1 and Q3. Fig. 11a shows a similar exemplary prediction cell table, for 1 km$^2$ cells.

In an embodiment, cells that are selected as qualified prediction cell may, in addition to populating a prediction cell table or as an alternative to such a table, be marked, for example with a prediction cell binary flag inserted in the cell record of the relevant geographical mesh representation(s) which may be set for example to the value "1" if the cell is selected as qualified prediction cell and to the value "0" otherwise.

In another embodiment, cells that are prediction cell may, in addition to populating a time dispersion table, or as an alternative to such a table, be marked, for example with a prediction cell binary flag inserted in the cell record of the relevant geographical mesh representation(s) which may be set for example to the value "1" if the cell is a prediction cell and to the value "0" otherwise.

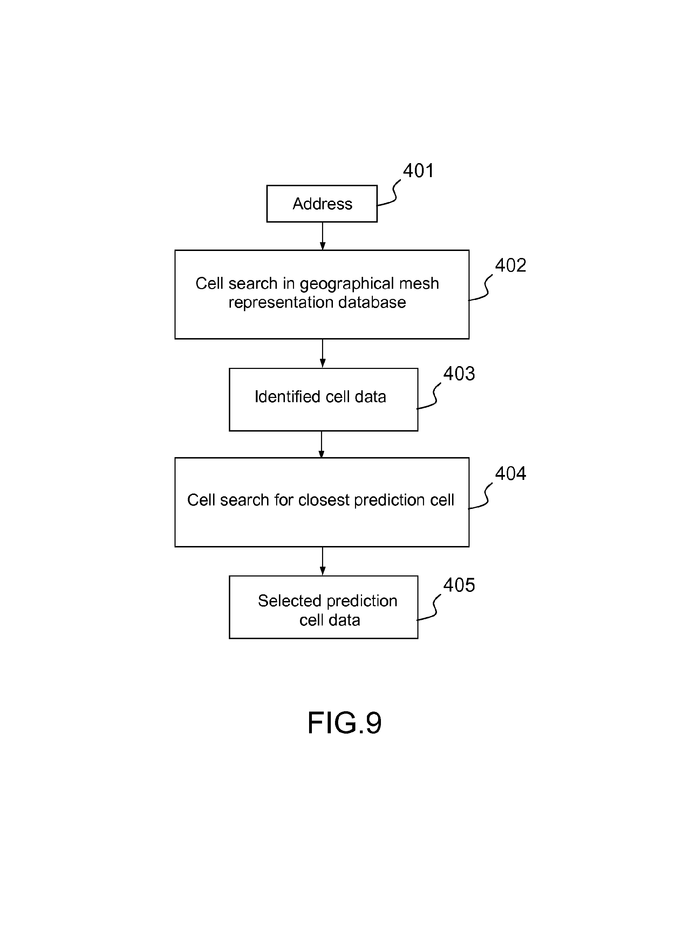

With reference to Fig. 9, a flow diagram illustrates an example method by which estimated service times are determined for a given geographical address of a service stop, according to one embodiment. The service prediction engine 106 receives 401 as input data the geographical address of a service stop for a package. The service prediction engine 106 is configured to execute upon receiving such input data a database search 402 in the geographical mesh representation database. In an embodiment, the database search algorithm may be configured so that the search is first executed in the finest granularity geographical mesh representation among the geographical mesh representations available in the geographical mesh representation database memory 102. For example, in a geographical mesh representation database which comprise two geographical mesh representations of the service territory, one with 200 m$^2$ cells, and the other with 1 km$^2$ cells, the database search algorithm will first execute a search in the geographical mesh representation with 200 m$^2$ cells.

The output to the database search algorithm will be data identifying a cell 403 in the searched geographical mesh representation that includes the input address. The data identifying a cell may be a cell_id associated in the geographical mesh representation database with cell data, or cell data itself, such as, for instance, the set of coordinates corresponding to the 4 vertices of the square-shaped cell.

Data corresponding to the cell output as a result of the geographical mesh representation database search is then stored in the other data memory 110, and used as input data of the prediction cell search engine 107. The prediction cell search engine 107 is configured for, based on data corresponding to a cell, determining a prediction cell 404, that is, a cell associated with respective service delivery history information, based on a proximity criterion. In an embodiment, the prediction cell search engine 107 selects a prediction cell based on its geographical proximity with its input cell.

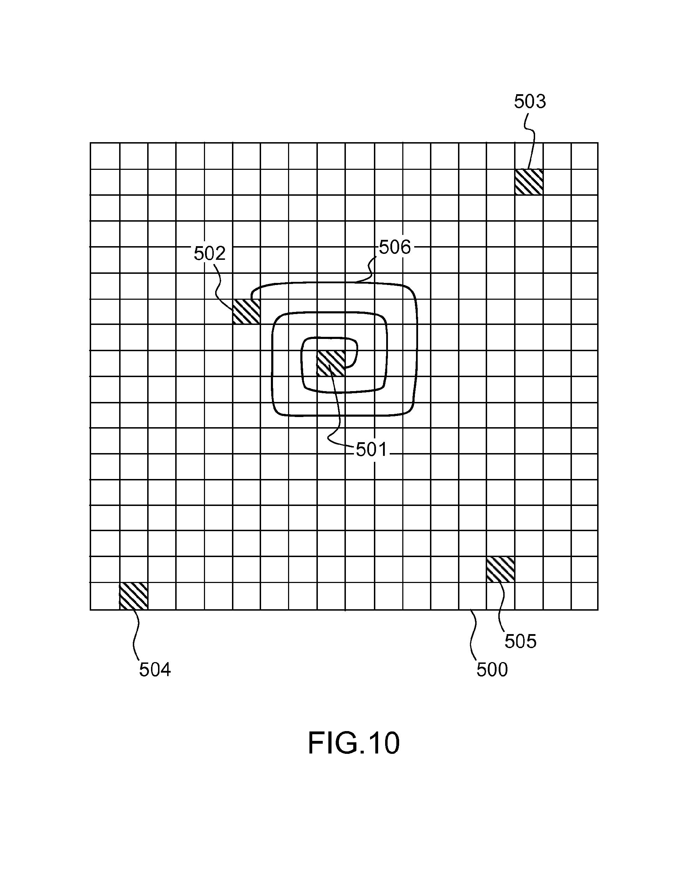

The cell search for the closest prediction cell can be initiated with the cell that resulted from the geographical mesh representation database search. In an embodiment, the prediction cell flag of this cell is checked to verify whether it is set to a value indicating that this cell is a prediction cell. In another embodiment, the cell identifier is searched in a time dispersion table as described above. In yet another embodiment in which prediction cell qualification is used, the cell identifier is searched in a prediction cell table as described above. If the flag test or the cell search fails, the cell search algorithm searches the geographical mesh representation starting with this initial cell, and progress in a "snail" manner as illustrated in Fig. 10. Fig. 10 illustrates an exemplary geographical mesh representation 500 which comprises $18 \times 18$ square-shaped cells. Also shown on Fig. 10 is the cell 501 which resulted from the geographical mesh representation database search. The cells 502, 503, 504, and 505 are prediction cells of the geographical mesh 500. As indicated by the arrow 506 on Fig. 10, the prediction cell search algorithm progresses with the cell adjacent to the initial cell 501 and located to the right thereof. The prediction cell flag of this first adjacent cell is checked, and the cell search progresses as indicated by the arrow by looping around the initial cell 501, and reaches cell 502 after having processed 37 cells (including the initial one) that were not prediction cells. It should be noted that the techniques described herein can be used with other cell search algorithm for selecting a prediction cell based on a proximity criterion. The prediction cell search algorithm outputs as result data 405 identifying a prediction cell 502. Such data 405 identifying a cell may be a cell_id associated in the geographical mesh representation database with cell data, or cell data itself, such as, for instance, the set of coordinates corresponding to the 4 vertices of the square-shaped cell. The cell search algorithm for the closest prediction cell may also be configured so that it results in data identifying a prediction cell selected as the closest prediction cell, or ends after a predetermined number of iterations, in order to avoid an infinite search or else a prediction cell result that would be considered too geographically distant from the cell determined as including the input geographical address.

In an embodiment where two geographical mesh representations of the service territory are available with different granularities, the database search may be first executed on the geographical mesh representations with the finest granularity (that is, with the smallest cells as compared to cells of the other geographical mesh representation). A loop algorithm may be used to detect that the cell search in the first geographical mesh representation does not identify a prediction cell before a predetermined number of iterations. For example, a cell counter may be used to count the number of cells that have been searched according to a search path (as illustrated on Fig. 10 with the "snail" search path) without success. The cell counter may be initialized to an initialization value, and incremented each time the search is executed on a new cell on the search path. After each increment of the counter, the current value of the counter may be compared to a threshold. If the current value of the counter is equal or greater than the threshold value, the search may end on the first geographical mesh representation, and resume on the second geographical mesh representation. In this embodiment, if the cell search in the finer granularity geographical mesh representation is unsuccessful for a predetermined number of iterations, the cell search is switched to the other geographical mesh representation and may converge to a result faster than if continued on the finer granularity geographical mesh representation. For example, in a geographical mesh representation database which comprise two geographical mesh representations of the service territory, one with 200 $m^2$ cells, and the other with 1 $km^2$ cells, the database search algorithm will first execute a search in the geographical mesh representation with 200 $m^2$ cells. The threshold may be set for example to the value 25, so that if the cell search processes 25 200 $m^2$ cells without finding a prediction cell, then the cell search may switch to the geographical mesh representation with 1 $km^2$ cells and resume the search on that geographical mesh representation.

In the case where the cell search algorithm for the closest prediction cell outputs as result data identifying a prediction cell selected as the closest prediction cell, service delivery history information associated with the selected prediction cell is retrieved from memory by the service prediction engine 106.

In an embodiment where the qualification process of prediction cell is not used, prediction cells may be cells for which service delivery history data exist, and relevant service delivery history information may be retrieved from the record of the time dispersion table corresponding to the prediction cell selected by the cell search algorithm. Service delivery history information retrieved from memory may then be the set of time values available for the selected cell.

In an embodiment, this set of time values may then be processed to generate estimate predictive time information. Generation of estimate predictive time information may include, for example, determining a median value of the set of time values, determining a mean value (such as the algebraic mean, geometric mean, or harmonic mean) of the set of time values, determining the interquartile range of the set of time values, and/or determining the standard deviation of the set of time values.

In another embodiment, this set of time values may then be processed as described above undergo a qualification process in order to determine whether or not estimate predictive time information that may be generated therefrom would be eligible for use, for instance in a service delivery process. Such processing may include determining whether or not the number of available time values exceeds a predetermined threshold, calculating a median value of a set of time values among the available time values, and/or calculating a median value quality factor, for example based on the standard deviation of the set of time values and the interquartile range of the set of time values. Such processing may include generating estimate time predictive information for servicing the package at the given geographical address, which may include, according to various embodiments, for example, determining a median value of the set of time values, determining a mean value (such as the algebraic mean, geometric mean, or harmonic mean) of the set of time values, determining the interquartile range of the set of time values, and/or determining the standard deviation of the set of time values. In embodiments corresponding to the exemplary qualification process described herein, generated estimate time predictive information may include the calculated median value. Because the selected prediction cell is considered the closest to the cell including the input geographical address, estimate predictive time information derived from service delivery history information available for the selected prediction cell may be considered applicable to the input geographical address, so that such estimate predictive time information will be considered a valid estimate for servicing the package at the geographical address.

In another embodiment, the qualification process of prediction cells, which includes processing the time values available as service delivery history information for each cell of each geographical mesh representation, is ran on a regular basis, for instance on a daily basis or on a weekly basis, so that the selection of prediction cells is updated regularly. This qualification process may be run independently from the process for generating estimate predictive time information, and in particular the prediction cell search and retrieval of service delivery history information associated therewith. It might be preferred to run the qualification process during time periods when estimate predictive time information database will not be accessed, for example by the process for generating estimate predictive time information. Therefore, it might be chosen to update the list of prediction cells and associated information for example at night, or on week-end days. In such case the qualification process of prediction cells may have included the generation of estimate predictive time information for the cell qualified as prediction cell. Indeed, as described above, service delivery history information comprising a set of time values available for each cell for which the qualification process is run may have been retrieved. This set of time values may have been processed as part of the qualification process to determine whether or not estimate predictive time information that may be generated therefrom would be eligible for use. Such processing may have included determining whether or not the number of available time values exceeds a predetermined threshold, calculating a median value of a set of time values among the available time values, and/or calculating a median value quality factor, for example based on the standard deviation of the set of time values and the interquartile range of the set of time values. As described above the qualified prediction cell may have been identified by a flag set to the value corresponding to a qualified prediction cell, and/or stored in a prediction cell table, together with corresponding service delivery history information. The service delivery history information corresponding in the prediction cell table to the prediction cell selected as being the closest to the cell that includes the input geographical address may then be retrieved from memory, and estimate predictive time information may be generated for the selected cell based on the retrieved service delivery history information. The exemplary prediction cell tables of Fig. 11a and 11b show service delivery history information associated with prediction cells in which estimate predictive time information, such as, for example, a median value and a sequence number for a day of the week, have been generated during the prediction cell qualification process and is stored in the prediction cell table. Because the selected prediction cell is considered the closest to the cell including the input geographical address, estimate predictive time information derived from service delivery history information available for the selected prediction cell may be considered applicable to the input geographical address, so that such estimate predictive time information will be considered a valid estimate for servicing the package at the geographical address.

While the invention has been described with respect to preferred embodiments, those skilled in the art will readily appreciate that various changes and/or modifications can be made to the invention without departing from the spirit or scope of the invention as defined by the appended claims. In particular, the invention is not limited to specific embodiments regarding the disclosed system architecture, and may be implemented using various system architectures and components without departing from its spirit or scope as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and subcombinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1. A method for estimating predictive time information of a package delivery service stop at an address in a service area, in a package service management system comprising a processor operatively coupled with a memory, wherein the service area is represented by a plurality of cells forming a mesh data structure stored in the memory, wherein at least some of the cells are associated with respective service delivery history information, the method comprising, with respect to a package to be serviced:

   • Determining a cell of the mesh data structure covering a geographical area which comprises the location that corresponds to the address;
   • Selecting a cell of the mesh data structure among the cells associated with respective service delivery history information, based on its proximity with the determined cell;
   • Retrieving service delivery history information associated with the selected cell;
   • Generating estimate predictive time information for servicing the package at the address based on the retrieved service delivery history information.

2. The method according to claim 1, wherein the mesh data structure is formed with square-shaped cells.

3. The method according to claim 1 or claim 2, wherein the selecting a cell of the mesh data structure is based on a geographical proximity with the determined cell.

4. The method according to any of the previous claims, wherein selecting a cell of the mesh data structure among the cells associated with respective service delivery history information includes selecting a cell for which associated service delivery history information includes more than a predetermined number of time values.

5. The method according to any of the previous claims, wherein retrieving service delivery history information includes retrieving information identifying a day of the week associated with other service delivery history information.

6. The method according to any of the previous claims, further comprising processing service delivery history information of cells associated with respective service delivery history information to calculate a median value of a set of time values in said respective service delivery history information, and wherein retrieving service delivery history information associated with the selected cell includes retrieving the calculated median value.

7. The method according to claim 6, further comprising processing service delivery history information of cells associated with respective service delivery history information to calculate a median value quality factor from the set of time values in said respective service delivery history information, and wherein selecting a cell of the mesh data structure among the cells associated with respective service delivery history information includes selecting a cell for which the calculated median value quality factor falls within a predetermined interval.

8. The method according to claim 7, wherein the median value quality factor is determined as the standard deviation of the set of time values in said respective service delivery history information, multiplied by the value of interquartile range of the set of time values in said respective service delivery history information.

9. A non-transitory computer-readable storage medium storing a computer program that, when executed, causes a package service management system comprising a processor operatively coupled with a memory, to perform a method for estimating predictive time information of a package delivery service stop at an address in a service area, wherein the service area is represented by a plurality of cells forming a mesh data structure stored in the memory, wherein at least some of the cells are associated with respective service delivery history information, the method comprising with respect to a package to be serviced:

   • Determining a cell of the mesh data structure covering a geographical area which comprises the location that corresponds to the address;
• Selecting a cell of the mesh data structure among the cells associated with respective service delivery history information, based on its proximity with the determined cell;
• Retrieving service delivery history information associated with the selected cell;
• Generating estimate predictive time information for servicing the package at the address based on the retrieved service delivery history information.

10. A package service management system, comprising;

• a processor;
• a memory, operatively coupled to the processor,
wherein the package service management system is configured to perform a method for estimating predictive time information of a package delivery service stop at an address in a service area, wherein the service area is represented by a plurality of cells forming a mesh data structure stored in the memory, wherein at least some of the cells are associated with respective service delivery history information, the method comprising, with respect to a package to be serviced:

■ Determining a cell of the mesh data structure covering a geographical area which comprises the location that corresponds to the address;
■ Selecting a cell of the mesh data structure among the cells associated with respective service delivery history information, based on its proximity with the determined cell;
■ Retrieving service delivery history information associated with the selected cell;
■ Generating estimate predictive time information for servicing the package at the address based on the retrieved service delivery history information.

11. A computer program product comprising computer program code tangibly embodied in a computer readable medium, said computer program code comprising instruction to, when provided to a computer system and executed, cause said computer to perform a method for estimating predictive time information of a package delivery service stop at an address in a service area, wherein the service area is represented by a plurality of cells forming a mesh data structure stored in the memory, wherein at least some of the cells are associated with respective service delivery history information, the method comprising, with respect to a package to be serviced:

• Determining a cell of the mesh data structure covering a geographical area which comprises the location that corresponds to the address;
• Selecting a cell of the mesh data structure among the cells associated with respective service delivery history information, based on its proximity with the determined cell;
• Retrieving service delivery history information associated with the selected cell;
• Generating estimate predictive time information for servicing the package at the address based on the retrieved service delivery history information.

FIG.1

| Cell identifier |
|:---:|
| 3859-2614 |
| 3882-2726 |
| 3865-2627 |
| 3871-2715 |
| 3894-2739 |
| 3889-2635 |
| 3890-2635 |

## FIG.2a

| Cell identifier |
|:---:|
| 38862-26662 |
| 38850-27024 |
| 38866-26658 |
| 38874-26652 |
| 38876-26670 |
| 38896-26352 |
| 38946-27394 |

## FIG.2b

Cell id ABCD - EFGH    50

| | Y = 0 | Y = 1 | Y = 2 | Y = 3 | Y = 4 |
|:---:|:---:|:---:|:---:|:---:|:---:|
| X = 0 | ABCD0 - EFGH0 | ABCD0 - EFGH1 | | | |
| X = 1 | ABCD1 - EFGH0 | ABCD1 - EFGH1 | | 51 x | |
| X = 2 | | | | | |
| X = 3 | | | | ABCD3 - EFGH3 | ABCD3 - EFGH4 |
| X = 4 | | | | ABCD3 - EFGH4 | ABCD4 - EFGH4 |

## FIG.2c

| Cell id | X_max | Y_max | X_min | Y_min |
|---|---|---|---|---|
| 36324-24952 | 1,22925 | 45,20406 | 1,22701 | 45,20206 |
| 36324-24954 | 1,22897 | 45,20585 | 1,22672 | 45,20385 |
| 39324-24956 | 1,22868 | 45,20764 | 1,22644 | 45,20564 |
| 36326-24946 | 1,23263 | 45,19891 | 1,23039 | 45,19691 |
| 36326-24948 | 1,23235 | 45,2007 | 1,2301 | 45,1987 |

# FIG.3

```
┌─────────────────────────────────┐  201
│          Generate               │
│  Prediction History Initial Table │
└─────────────────────────────────┘
              │
              ▼
┌─────────────────────────────────┐  202
│   Augment Prediction History     │
│  Initial Table with cell information │
└─────────────────────────────────┘
              │
              ▼
┌─────────────────────────────────┐  203
│                                 │
│   Generate time dispersion table │
│                                 │
└─────────────────────────────────┘
              │
              ▼
┌─────────────────────────────────┐  204
│  Process the time dispersion table │
│     to select prediction cells   │
└─────────────────────────────────┘
```

# FIG.4

| Id | Customer name | Address | Week day # | Month | Year | Time | Postal code | X | Y |
|---|---|---|---|---|---|---|---|---|---|
| 1 | Cutomer_1 | Address_1 | 2 | 5 | 2012 | 09 :32 :30 | 59290 | 3,124087 | 50,653549 |
| 2 | Cutomer_2 | Address_2 | 2 | 12 | 2011 | 12 :36 :45 | 59552 | 3,058603 | 50,359033 |
| 3 | Cutomer_3 | Address_3 | 2 | 5 | 2012 | 15 :21 :33 | 59142 | 3,299096 | 50,037289 |
| 4 | Cutomer_3 | Address_3 | 2 | 5 | 2012 | 15 :21 :31 | 59142 | 3,299096 | 50,037289 |
| 5 | Cutomer_4 | Address_4 | 2 | 1 | 2012 | 16 :06 :38 | 59832 | 3,027430 | 50,664988 |

## FIG.5

| Id | Customer name | Address | Week day # | Month | Year | Time | Postal code | X | Y | Cell identifier |
|---|---|---|---|---|---|---|---|---|---|---|
| 1 | Cutomer_1 | Address_1 | 2 | 5 | 2012 | 09 :32 :30 | 59290 | 3,124087 | 50,653549 | 3131-0638 |
| 2 | Cutomer_2 | Address_2 | 2 | 12 | 2011 | 12 :36 :45 | 59552 | 3,058603 | 50,359033 | 3093-0799 |
| 3 | Cutomer_3 | Address_3 | 2 | 5 | 2012 | 15 :21 :33 | 59142 | 3,299096 | 50,037289 | 3162-0986 |
| 4 | Cutomer_3 | Address_3 | 2 | 5 | 2012 | 15 :21 :31 | 59142 | 3,299096 | 50,037289 | 3162-0986 |
| 5 | Cutomer_4 | Address_4 | 2 | 1 | 2012 | 16 :06 :38 | 59832 | 3,027430 | 50,664988 | 3098-0629 |

## FIG.6

| Cell Identifier | Time value #1 (hh:mm:ss) | Time value #2 (hh:mm:ss) | Time value #3 (hh:mm:ss) | Time value #4 (hh:mm:ss) | Time value #5 (hh:mm:ss) | Time value #6 (hh:mm:ss) | Time value #7 (hh:mm:ss) | Time value #8 (hh:mm:ss) | Time value #9 (hh:mm:ss) |
|---|---|---|---|---|---|---|---|---|---|
| 2771-1626 | 09:53:39 | 09:53:43 | 09:53:45 | 09:53:47 | 09:54:55 | 09:54:57 | 10:07:25 | 10:07:26 | 10:25:28 |
| 2772-1626 | 09:47:25 | 09:51:08 | 09:55:06 | 10:18:30 | 10:27:33 | 10:27:35 | 10:27:49 | 10:30:04 | 10:33:24 |
| 2773-1627 | 09:25:23 | 09:25:42 | 09:25:43 | 09:25:44 | 09:25:49 | 09:25:54 | 09:26:11 | 09:38:09 | 09:38:12 |
| 2776-1628 | 13:14:41 | 14:41:53 | 14:41:55 | 15:23:35 | 15:23:41 | 15:26:25 | (empty) | (empty) | (empty) |
| 2776-1635 | 11:33:15 | 11:33:22 | 11:33:50 | 11:33:59 | 11:34:09 | 12:53:39 | 13:47:02 | (empty) | (empty) |

FIG.7

FIG.8

401

Address

402

Cell search in geographical mesh
representation database

403

Identified cell data

404

Cell search for closest prediction cell

405

Selected prediction
cell data

FIG.9

FIG.10

| Cell identifier | Day Number | Median | Q1 | Q3 |
|---|---|---|---|---|
| 3715-2506 | 3 | 14 :30 :34 | 14 :22 :03 | 15 :29 :44 |
| 3627-2462 | 3 | 10 :04 :37 | 10 :00 :38 | 10 :07 :52 |
| 3676-2502 | 3 | 11 :53 :20 | 11 :40 :35 | 12 :17 :08 |
| 3590-2493 | 3 | 14 :45 :54 | 14 :42 :10 | 15 :15 :30 |
| 3650-2491 | 3 | 15 :24 :28 | 14 :56 :45 | 15 :40 :26 |
| 3721-2523 | 3 | 11 :27 :27 | 11 :19 :48 | 11 :35 :06 |

FIG.11a

| Cell identifier | Day Number | Median | Q1 | Q3 |
|---|---|---|---|---|
| 39864-24620 | 3 | 10 :04 :01 | 09 :31 :43 | 10 :20 :41 |
| 39800-24684 | 3 | 12 :55 :09 | 12 :37 :02 | 13 :05 :33 |
| 39866-24636 | 3 | 09 :56 :53 | 09 :28 :24 | 10 :14 :33 |
| 39824-24620 | 3 | 14 :15 :07 | 14 :00 :52 | 14 :16 :11 |
| 39866-24634 | 3 | 10 :07 :06 | 09 :30 :30 | 10 :30 :16 |

FIG.11b

Europäisches
Patentamt

European
Patent Office

Office européen
des brevets

**EUROPEAN SEARCH REPORT**

Application Number

EP 12 19 9758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 991 739 A (CUPPS BRYAN [US] ET AL) 23 November 1999 (1999-11-23) * the whole document * ----- | 1-11 | INV. G06Q10/04 G06Q10/08 |
| X | US 6 321 158 B1 (DELORME DAVID M [US] ET AL) 20 November 2001 (2001-11-20) * column 60, line 35 - column 61, line 5 * ----- | 1-11 | |
| X | US 2003/014286 A1 (CAPPELLINI PABLO DARIO [GB]) 16 January 2003 (2003-01-16) * paragraph [0171]; claims 16-17 * ----- | 1-11 | |
| X | US 2009/089078 A1 (BURSEY BRENT [US]) 2 April 2009 (2009-04-02) * paragraphs [0110], [0113], [0147], [0173] * ----- | 1-11 | |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 6 May 2013 | Aguilar, José María |

EPO FORM 1503 03.82 (P04C01)

**ANNEX TO THE EUROPEAN SEARCH REPORT
ON EUROPEAN PATENT APPLICATION NO.**

EP 12 19 9758

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2013

| Patent document cited in search report | | Publication date | Patent family member(s) | | Publication date |
|---|---|---|---|---|---|
| US 5991739 | A | 23-11-1999 | NONE | | |
| US 6321158 | B1 | 20-11-2001 | US | 6321158 B1 | 20-11-2001 |
| | | | US | 2003182052 A1 | 25-09-2003 |
| US 2003014286 | A1 | 16-01-2003 | GB | 2381884 A | 14-05-2003 |
| | | | US | 2003014286 A1 | 16-01-2003 |
| US 2009089078 | A1 | 02-04-2009 | US | 2009089078 A1 | 02-04-2009 |
| | | | US | 2009157419 A1 | 18-06-2009 |

EPO FORM P0459

For more details about this annex : see Official Journal of the European Patent Office, No. 12/82